(19) **Europäisches Patentamt / European Patent Office / Office européen des brevets**

(11) **EP 2 943 935 B1**

(12) **FASCICULE DE BREVET EUROPEEN**

(45) Date de publication et mention
de la délivrance du brevet:
**08.03.2017 Bulletin 2017/10**

(21) Numéro de dépôt: **14703136.3**

(22) Date de dépôt: **10.01.2014**

(51) Int Cl.:
*G06T 7/20* $^{(2017.01)}$      *H04N 5/14* $^{(2006.01)}$
*H04N 19/513* $^{(2014.01)}$   *H04N 19/43* $^{(2014.01)}$

(86) Numéro de dépôt international:
**PCT/FR2014/050049**

(87) Numéro de publication internationale:
**WO 2014/108652 (17.07.2014 Gazette 2014/29)**

(54) **ESTIMATION DE MOUVEMENT D'UNE IMAGE**

SCHÄTZUNG DER BEWEGUNG EINES BILDES

ESTIMATION OF THE MOVEMENT OF AN IMAGE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.01.2013 FR 1350271**

(43) Date de publication de la demande:
**18.11.2015 Bulletin 2015/47**

(73) Titulaire: **Safran Electronics & Defense
92100 Boulogne-Billancourt (FR)**

(72) Inventeurs:
• **JACQUELIN, Frédéric
F-92100 Boulogne-Billancourt (FR)**
• **BUDIN, Joël
F-92100 Boulogne-Billancourt (FR)**

(74) Mandataire: **Cabinet Plasseraud
66 rue de la Chaussée d'Antin
75440 Paris Cedex 09 (FR)**

(56) Documents cités:
**EP-A1- 0 360 698      WO-A2-2008/099399
US-A1- 2011 043 706**

• **BLACK M J ET AL: "THE ROBUST ESTIMATION
OF MULTIPLE MOTIONS: PARAMETRIC AND
PIECEWISE-SMOOTH FLOW FIELDS",
COMPUTER VISION AND IMAGE
UNDERSTANDING, ACADEMIC PRESS, US, vol.
63, no. 1, 1 janvier 1996 (1996-01-01), pages
75-104, XP000582617, ISSN: 1077-3142, DOI:
10.1006/CVIU.1996.0006**
• **S. S. BEAUCHEMIN ET AL: "The computation of
optical flow", ACM COMPUTING SURVEYS, vol.
27, no. 3, 1 septembre 1995 (1995-09-01), pages
433-466, XP055079144, ISSN: 0360-0300, DOI:
10.1145/212094.212141**

**Description**

L'invention se rapporte au domaine du traitement d'image, et plus particulièrement au domaine de l'estimation de mouvement au sein d'une séquence d'images captées.

Lorsqu'un capteur capte une séquence d'images successives, par exemple dans le cas d'une vidéo, il est connu d'effectuer une estimation de mouvement globale inter images. Cette estimation de mouvement vise à déterminer le mouvement global affectant la séquence d'images entre des couples d'images successives de la séquence et peut correspondre à la détermination du mouvement de l'axe de visée du capteur utilisé.

Une telle estimation de mouvement global permet notamment la mise en oeuvre d'une stabilisation d'images, de débruitage d'images, ou encore d'algorithmes de super-résolution.

Toutefois, ce type de traitement peut être sensiblement perturbé lorsque la scène captée comprend des objets qui sont mobiles dans la scène au cours de la séquence d'images en question.

Des systèmes de traitement d'images reposent alors sur la mise en oeuvre d'une estimation de mouvement non plus globale mais dense, encore appelée « estimation de mouvement local ».

Une estimation de mouvement dense consiste à estimer le mouvement en chaque point $P(x,y)$, ou pixel, des images de la séquence captée. Plus précisément, un champ de déplacement $\vec{d}(x,y)$ est défini à partir de deux images et correspond aux vecteurs à appliquer respectivement à chaque point de la première image pour obtenir le point correspondant de la deuxième image.

Outre le champ de déplacement $\vec{d}(x,y)$, le champ de vitesse $\vec{v}(x,y)$ peut être intéressant. Ce champ de vitesses est aussi appelé flot optique et est formé par l'ensemble des vecteurs vitesse à un instant donné de chaque point de l'image. Ce champ de vitesse est fonction de la dérivée du champ de déplacement par rapport à une référence fixe.

Les méthodes d'estimation de mouvement dense sont ainsi basées sur l'hypothèse de conservation de la luminance pour chaque point de la scène qui est traduite par l'équation de contrainte du mouvement apparent (ECMA) :

$$I(x,y,t) = I(x + dx, y + dy, t + dt) \qquad (1)$$

où les images de la série d'image sont munies d'un repère (O, x, y) et d'axes Ox et Oy permettant de repérer les points $P(x,y)$ desdites images. $I(x,y,t)$ est une valeur d'intensité lumineuse (ci-après dénommée « intensité ») d'un point $P(x,y)$ de la scène à un instant $t$ de capture d'une image dite image précédente $I_{k-1}$. Une image dite image suivante $I_k$ est capturée à un instant $t + dt$ et $dt$ correspond alors à l'intervalle de temps entre les deux images $I_{k-1}$, $I_k$. Enfin, $(dx,dy) = \vec{d}(x,y)$ désigne le vecteur déplacement du point $P(x,y)$ entre les instants $t$ et $t + dt$.

Pour déterminer le champ de vitesses $\vec{v} = (v_x, v_y) = (\dfrac{dx}{dt}, \dfrac{dy}{dt})$ aussi appelé champ de vecteurs vitesse ou champ de mouvement, il est possible de réaliser un développement limité au premier ordre de l'équation ci-dessus :

$$I(x, y, t) = I(x, y, t) + [\frac{\partial I}{\partial x} dx + \frac{\partial I}{\partial y} dy + \frac{\partial I}{\partial t} dt] \qquad (2)$$

L'équation (2) peut s'écrire comme suit :

$$\frac{\partial I}{\partial x} dx + \frac{\partial I}{\partial y} dy + \frac{\partial I}{\partial t} dt = 0 \qquad (3)$$

On peut enfin écrire l'équation (3) comme suit :

$$\frac{\partial I}{\partial x} v_x + \frac{\partial I}{\partial y} v_y + \frac{\partial I}{\partial t} = 0 \qquad (4)$$

Afin d'estimer le vecteur de mouvement en un point $P(x,y)$, il convient donc de résoudre cette équation (3). Cette équation ne suffit cependant pas à elle seule à déterminer le mouvement : c'est ce qui est appelé un problème « mal posé ».

Pour contourner cette difficulté, il convient d'imposer des contraintes supplémentaires sur la solution cherchée, par exemple des hypothèses de régularité locale du champ de vitesses, et différentes méthodes sont connues pour procéder à cette estimation, telles par exemple que la méthode de Horn-Schunck et la méthode de Lucas-Kanade.

Ces méthode, decrites par exemple dans EP 0 360 698 ou XP000582617, Block, "The Robust Estimation of Multiple Motions" (1996), présentent toutefois des inconvénients.

La méthode de Horn-Schunck impose une hypothèse de régularité du champ de vitesses qui limite son efficacité en présence de discontinuités du champ de vitesses. Sa résolution se fait en outre par descente de gradient et est par conséquent lente.

La méthode de Lucas-Kanade suppose la constance locale du champ de vitesses. Elle est robuste au bruit mais présente l'inconvénient d'être éparse c'est-à-dire qu'elle ne permet pas d'estimer les champs de vitesse au niveau des points dans le voisinage desquels le gradient spatial vectoriel d'intensité est uniforme localement.

Par « uniforme localement », on entend que les gradients spatiaux vectoriel d'intensité au niveau des différents points du voisinage considéré sont soit sensiblement parallèles entre eux, soit sensiblement nuls. Par sensiblement nul on entend que la norme d'un gradient spatial vectoriel d'intensité considéré est inférieure au bruit de l'image.

Dans la suite, on entend par gradient spatial (d'intensité) l'une quelconque des composantes scalaires (par exemple $\frac{\partial I}{\partial x}$ ou $\frac{\partial I}{\partial y}$) du gradient spatial vectoriel (d'intensité), qui est un vecteur.

On emploiera également de façon interchangeable l'expression « gradient spatial vectoriel d'intensité » et « gradient spatial d'intensité vectoriel ».

Dans la suite, on entend par gradient spatio-temporel (d'intensité) l'une quelconque des composantes scalaires (par exemple $\frac{\partial I}{\partial x}$, $\frac{\partial I}{\partial y}$ ou $\frac{\partial I}{\partial t}$ ) du gradient spatio-temporel vectoriel (d'intensité).

Il est possible de combiner les procédés de Horn-Schunck et de Lucas-Kanade, comme cela est détaillé par exemple dans l'article « Lucas/Kanade Meets Horn/Schunck: Combining Local and Global Optic Flow Methods » de A. Brunh, J. Weickert et C. Schnörr. Cette méthode présente cependant elle aussi des inconvénients tels que le coût de calcul lié à la méthode de résolution itérative utilisée dans cette méthode, ou la pondération fixe d'un terme appelé terme d'attache à la donnée qui ne tient pas compte du degré de régularité du champ de déplacement calculé.

L'invention vise à améliorer la situation.

A cet effet, un premier aspect de l'invention propose un procédé d'estimation de mouvement dans une série d'images captées par un capteur d'image, ladite série d'images comportant au moins une image précédente $I_{k-1}$ et une image suivante $I_k$, les images comportant des points auxquels sont associées des données d'intensité.

Le procédé comporte une étape d'estimation de vecteurs de mouvement estimé $V$, réalisée en une pluralité de points d'une image choisie parmi la liste constituée par l'image précédente $I_{k-1}$ et l'image suivante $I_k$.

L'étape d'estimation comprend, pour chacun des points $P$ de ladite pluralité de points d'une image, une opération de minimisation d'une fonctionnelle $J$ de vecteurs de mouvement $V$.

La fonctionnelle $J$ comporte une somme d'au moins un terme dit terme des données et un terme dit terme de régulation.

Le terme des données est fonction de gradients spatio-temporels de données d'intensité associées à une pluralité de points d'un voisinage $\Omega_P$ d'un point P. Selon un mode de réalisation, le terme des données est fonction des gradients spatio-temporels vectoriels de données d'intensité associées (c'est-à-dire de chacune de leurs composantes scalaires).

Le terme de régulation a une valeur finie au moins en chacun des points $P$ de ladite pluralité de points d'une image aux niveaux desquels la minimisation du terme des données fournit une solution irrégulière.

Une solution est irrégulière si la minimisation du terme d'attache à la donnée ne permet pas d'estimer une solution unique.

Le terme des données comporte un produit d'un terme dit terme de pondération et d'un terme dit terme d'attache à la donnée,

le terme de pondération étant fonction d'un degré de régularité de vecteurs de mouvement $V$ estimés,

le terme d'attache à la donnée étant fonction de gradients spatio-temporels de données d'intensité associées à une pluralité de points d'un voisinage $\Omega_P$ d'un point P. Selon un mode de réalisation, le terme d'attache à la donnée est fonction des gradients spatio-temporels vectoriels de données d'intensité associées (c'est-à-dire de chacune de leurs composantes scalaires).

On entend ici par les termes « image précédente » et « image suivante » d'une série d'images captées, deux images qui se suivent chronologiquement dans la série d'images considérée. Ces deux images qui se suivent peuvent être consécutives (c'est-à-dire n'être séparées par aucune image captée intermédiaire) ou bien encore espacées entre elles par une ou plusieurs images captées intermédiaires. Aucune limitation n'est attachée à l'espacement entre l'image précédente et l'image suivante considérées ici.

On entend par les termes « estimation de vecteurs de mouvement estimé », un procédé d'estimation permettant de fournir des vecteurs de mouvements estimés pour chaque partie de l'image, avec plus ou moins de précision. Un mouvement d'image peut ainsi être estimé en chaque point de l'image par exemple. Ce type d'estimation de mouvement permet de représenter notamment le mouvement d'objets mobiles qui pourraient traverser les images de la série d'images captées. Parmi les méthodes classiques présentes dans la littérature, l'homme du métier connait notamment les méthodes de Lucas-Kanade et de Horn-Schunck.

Une première méthode consiste en une résolution de l'équation du mouvement apparent aux moindres carrés sur une fenêtre locale. Une deuxième méthode, extraite de l'article de Berthold K. P. Horn et Brian G. Schunck, « Determining optical flow » (ARTIFICAL INTELLIGENCE, 1981), consiste en une minimisation d'une fonctionnelle comportant un terme d'attache à la donnée comprenant le carré de l'équation du mouvement apparent, et un terme de régularisation comprenant le carré de la variation locale du champ.

On entend par « la donnée » l'ensemble des données d'intensité des points d'une image.

Le « terme des données » et le « terme d'attache à la donnée ») sont des termes fonction des gradients spatio-temporels de l'intensité au niveau des points situés dans un voisinage $\Omega_0$ d'un point $P_0(x_0,y_0)$.

L'étendue de ce voisinage $\Omega_0$, par exemple la distance maximale des points compris dans ce voisinage par rapport au point $P_0$, ainsi qu'une pondération de chacun de ces points dans un calcul de terme d'attache à la donnée peuvent être variables suivant les conditions d'utilisation du procédé.

On entend par terme de régulation, un terme ayant une valeur finie au moins en chacun des points $P_0$ de l'image au niveau desquels la minimisation du terme des données fourni une solution irrégulière.

La minimisation du terme des données fournit par exemple une solution irrégulière dans les régions homogènes et dans les régions de faible diversité angulaire. Les régions homogènes sont des régions d'intensité sensiblement constante et donc dans lesquelles les modules des gradients spatiaux vectoriels des intensités sont sensiblement nuls (inférieurs à un seuil déterminé, pouvant correspondre à un niveau de bruit). Dans une région de faible diversité angulaire les gradients spatiaux vectoriels associés d'intensité aux différents points de la région sont sensiblement parallèles.

La diversité angulaire est mesurée par exemple par la variance de l'ensemble des angles définis respectivement par une paire de gradients, pour toutes les paires de gradients possibles choisies dans l'ensemble de tous les gradients considérés.

Une région de faible diversité angulaire est une région dans laquelle la diversité angulaire des gradients spatiaux d'intensité vectoriels associés aux différents points de la région est sensiblement nulle (inférieure à un seuil déterminé, pouvant correspondre à un niveau de bruit).

Une valeur finie d'un terme (par exemple un terme de régulation) est une valeur réelle ou imaginaire, unique et non infinie. Une telle valeur finie peut être définie préalablement à une étape d'estimation ou calculable au moyen d'une fonction régulière définie sur un intervalle comportant un point $P_0$. Un terme de régulation permet donc de lisser un champ de vecteurs de mouvement en fournissant une solution au problème consistant à minimiser une fonctionnelle aux niveaux des points d'une image où la minimisation d'un terme d'attache à la donnée ne permet pas d'estimer une solution unique.

On entend par terme de pondération un terme permettant de pondérer l'importance relative de termes d'attache à la donnée et de termes de régulation, la pondération étant effectuée en fonction d'un gradient spatial des données d'intensité dans un voisinage d'un point $P_0$. Selon un mode de réalisation, la pondération est effectuée en fonction d'un gradient spatial vectoriel des données d'intensité dans un voisinage d'un point $P_0$.

On entend par degré de régularité de vecteurs de mouvement estimé, une fonction de la variance du champ de vecteur de mouvement estimé.

Dans des modes de réalisation possibles de l'invention, on peut éventuellement avoir recours en outre à l'une et/ou à l'autre des dispositions suivantes :

- l'opération de minimisation est réitérée au moins une fois ;
- lors d'une itération $n+1$ de l'opération de minimisation, le terme de régulation comporte une fonction de vecteurs de mouvement estimé $V$ obtenus à l'itération précédente $n$ ;
- lors d'une itération $n+1$ de l'opération de minimisation, le terme de pondération comporte une fonction d'une variance locale de vecteurs de mouvement estimé $V$ vobtenus à l'itération précédente $n$ ;
- l'opération de minimisation de la fonctionnelle comporte une minimisation des moindres carrés ;
- le procédé comprend en outre une étape de mise à l'échelle d'images de la série d'images, ladite étape de mise à l'échelle étant réalisée préalablement à l'étape d'estimation de vecteurs de mouvement estimé $V$ ;
- l'étape de mise à l'échelle et l'étape d'estimation sont réitérées pour au moins deux échelles différentes d'images de la série d'images ;
- le procédé comprend en outre une étape de recalage de l'image suivante $I_k$, réalisée après l'étape de mise à l'échelle et avant l'étape de minimisation, l'étape de recalage comprenant, pour une itération $n+1$ desdites étapes de mise à l'échelle, de recalage et d'estimation, le recalage de l'image suivante $I_k$ sur la base des vecteurs de mouvement estimé $V$ obtenus à l'itération précédente $n$ ;

- les vecteurs de mouvement estimé $V$ obtenus à une itération $n+1$ sont conservés s'ils vérifient un critère de fiabilité d'estimation et remplacé par une fonction des vecteurs de mouvement estimé $V$ obtenus à l'itération précédente $n$ s'ils ne vérifient pas ledit critère.

L'invention a également pour objet un système de traitement d'une série d'images captées par un capteur d'image, ladite série d'images comportant au moins une image précédente $I_{k-1}$ et une image suivante $I_k$, les images comportant chacune des points auxquels sont associées des données d'intensité,

le système comportant un circuit d'estimation adaptée pour estimer des vecteurs de mouvement estimé $V$ en une pluralité de points d'une image choisie parmi la liste constituée par l'image précédente $I_{k-1}$ et l'image suivante $I_k$,

ladite estimation comportant, pour chacun des points $P$ de ladite pluralité de points d'une image, une opération de minimisation d'une fonctionnelle $J$ de vecteurs de mouvement $V$,

la fonctionnelle $J$ comportant une somme d'au moins un terme des données et un terme de régulation,

le terme des données étant fonction de gradients spatio-temporels de données d'intensité associées à une pluralité de points d'un voisinage $\Omega_P$ d'un point P,

le terme de régulation ayant une valeur finie au moins en chacun des points $P$ de ladite pluralité de points d'une image aux niveaux desquels la minimisation du terme des données fournit une solution irrégulière,

le terme des données comportant un produit d'un terme de pondération et d'un terme d'attache à la donnée,

le terme de pondération étant fonction d'un degré de régularité de vecteurs de mouvement $V$ estimés,

le terme d'attache à la donnée étant fonction de gradients spatio-temporels de données d'intensité associées à une pluralité de points d'un voisinage $\Omega_P$ d'un point P.

L'invention a encore pour objet un programme d'ordinateur comprenant des instructions aptes à mettre en oeuvre un procédé tel que décrit ci-dessus, lors d'une exécution de ce programme par un circuit d'un système de traitement d'une série d'images captées par un capteur d'image.

L'invention a enfin pour objet un support d'enregistrement non transitoire sur lequel est stocké un programme d'ordinateur tel que décrit ci-dessus.

D'autres caractéristiques et avantages de l'invention apparaîtront encore à la lecture de la description qui va suivre. Celle-ci est purement illustrative et doit être lue en regard des dessins annexés sur lesquels :

- la figure 1 illustre les principales étapes d'un procédé d'estimation de mouvement selon un mode de réalisation de la présente invention ;
- la figure 2 illustre une mise en oeuvre d'un procédé d'estimation selon un mode de réalisation de la présente invention ;
- la figure 3 illustre une autre mise en oeuvre d'un procédé d'estimation selon un mode de réalisation de la présente invention ;
- la figure 4 illustre un dispositif de traitement comprenant des moyens adaptés pour mettre en oeuvre un procédé selon un mode de réalisation de la présente invention ; et
- les figures 5a, 5b, 5c et 5d illustrent respectivement une première image source, une seconde image source, une estimation du champ de vitesse horizontal obtenue suite à l'exécution d'un procédé selon un mode de réalisation de la présente invention et une estimation du champ de vitesse vertical obtenue suite à l'exécution d'un procédé selon un mode de réalisation de la présente invention.

De façon similaire à la méthode de Lucas-Kanade décrite dans la thèse de Bruce D. Lucas réalisée à l'université de Carnegie Mellon et publiée en 1984 sous le titre « Generalized image matching by the method of différences », le champ de vitesse peut être supposé localement constant sur un voisinage $\Omega_0$ de chaque point $P_0(x_0, y_0)$.

Il est alors possible de résoudre l'équation (4) par une méthode de minimisation des moindres carrés, de sorte à déterminer une valeur du champ de vitesse $\vec{w}$ qui minimise la fonctionnelle $H$ suivante :

$$H(v_x, v_y) = \sum_{(x,y) \in \Omega_0} W(x - x_0, y - y_0)\left[\frac{\partial I}{\partial x}(x, y)v_x(x_0, y_0) + \frac{\partial I}{\partial y}(x, y)v_y(x_0, y_0) + \frac{\partial I}{\partial t}\right]^2$$

$$(5)$$

La fonction fenêtre $W$ permet d'effectuer une pondération sur l'ensemble des points du voisinage $\Omega$ du point $P_0(x_0, y_0)$. Elle peut par exemple être telle que $\sum W = 1$, par exemple $W = [1\ 2\ 1]^T[1\ 2\ 1]/4^2$.

Résoudre le système de l'équation (5) aux moindres carrés nécessite d'inverser une matrice de taille 2x2. Cette inversion n'est possible qu'au niveau de points présentant une diversité angulaire de gradients spatiaux de l'intensité suffisamment élevée, comme précisé ci-avant, par exemple de points dans le voisinage desquels il existe au moins deux points dont les gradients spatiaux vectoriels d'intensité lumineuse ont des directions sensiblement distinctes.

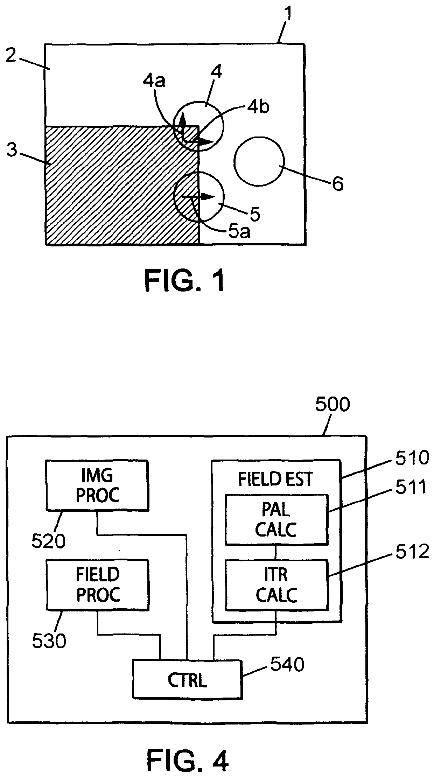

Ainsi, en référence à la **figure 1**, une image 1 peut par exemple être formée d'une région homogène claire 2 ainsi que d'une région homogène foncée 3 de forme globalement rectangulaire.

Un premier voisinage 4, ayant par exemple la forme générale d'un disque centré sur l'un des sommets de la région homogène foncée 3, comprendra donc des gradients spatiaux vectoriels de l'intensité selon deux directions différentes 4a et 4b, par exemple suivant la direction horizontale et la direction verticale. Un déplacement de la région homogène foncée 3 pourra alors être complètement déterminée dans ce voisinage.

Un deuxième voisinage 5, de forme similaire au premier voisinage 4 et situé par exemple au niveau de l'une des arrêtes verticales de la homogène foncée 3, ne comprend un gradient spatial vectoriel de l'intensité que selon une direction 5a, par exemple la direction horizontale. Le déplacement de la région homogène foncée 3 ne peut donc pas être complètement déterminé.

Enfin, un troisième voisinage 6, également de forme similaire au premier voisinage 4, est par exemple situé en totalité dans la région homogène claire 2. Dans ce voisinage 6, le gradient spatial vectoriel de l'intensité est sensiblement nul et l'estimation du champ de déplacement est donc impossible.

Il existe ainsi deux types de régions dans lesquelles l'estimation du champ de vitesse par une méthode de Lucas-Kanade n'est pas possible :

- les régions dans lesquelles l'intensité lumineuse est homogène (faible gradient spatial de l'intensité suivant toutes les directions) et dans lesquels il n'est donc pas possible d'estimer le champ de vitesse, et
- les régions dans lesquelles l'intensité lumineuse ne varie que suivant une direction (gradients spatiaux vectoriels de l'intensité sensiblement orientés suivant une même direction pour tous les points de la région), par exemple les bords unidimensionnels, régions dans lesquelles seule une composante du champ de vitesse n'est estimable de façon fiable.

Pour réaliser une minimisation en tout point, il est avantageux de minimiser la fonctionnelle $J$ suivante en chaque point $P_0(x_0,y_0)$ de l'image :

$$J(v_x, v_y)(x_0, y_0) =$$

$$\phi(v_x, v_y)\left[\sum_{(x,y)\in\Omega_0} W(x - x_0, y - y_0)\left(\frac{\partial I}{\partial x}(x, y)v_x(x_0, y_0) + \frac{\partial I}{\partial y}(x, y)v_y(x_0, y_0) + \frac{\partial I}{\partial t}\right)^2\right]$$
$$+ \lambda^2\left((v_x - \bar{v}_x)^2 + (v_y - \bar{v}_y)^2\right)$$
$$(6)$$

Cette fonctionnelle comporte trois termes : un terme d'attache à la donnée, un terme de pondération en fonction du degré de régularité du champ estimé et un terme de régulation, qui vont maintenant être détaillés.

La fonctionnelle est constituée du produit du terme de pondération et du terme de d'attache à la donnée, auquel est ajouté le terme de régulation.

Le terme $\displaystyle\sum_{(x,y)\in\Omega_0} W(x - x_0, y - y_0)\left(\frac{\partial I}{\partial x}(x, y)v_x(x_0, y_0) + \frac{\partial I}{\partial y}(x, y)v_y(x_0, y_0) + \frac{\partial I}{\partial t}\right)^2$ de l'équation (6) précédente est un terme d'attache à la donnée qui prend en compte la constance locale du champ de vitesse dans un voisinage $\Omega_0$ du point $P_0(x_0,y_0)$, de façon similaire à la fonctionnelle $H$ de l'équation (5) ci-avant. La minimisation de ce terme permet d'estimer un champ de vitesse en fonction des gradients spatio-temporels de l'intensité lumineuse.

Le terme $\phi(v_x,v_y)$ de l'équation (6) précédente est un terme de pondération en fonction du degré de régularité du champ estimé du terme d'attache à la donnée. Ce terme permet de réduire l'importance du terme d'attache à la donnée dans les régions homogènes et unidimensionnelles.

Comme détaillé ci-avant, dans les régions homogènes et unidimensionnelles, l'estimation du champ de vitesse fournie par le terme d'attache à la donnée est irrégulière et sujette à caution.

A titre d'exemple, une fonction de la forme $\varphi((\mathrm{var}(v_x,v_y))$ pourra être employée pour le terme $\phi(v_x,v_y)$, la fonction étant une fonction décroissante à valeur entre 0 et 1 et $\mathrm{var}(v_x,v_y)$ étant la variance du champ de vitesse au point $P_0(x_0,y_0)$

ou dans un voisinage du point $P_0(x_0,y_0)$. Ainsi, lorsque l'estimation du champ de vitesse est irrégulière, la variance var($v_x,v_y$) est élevée et le terme de pondération est proche de 0. Si, au contraire, l'estimation est régulière, la variance est faible et le terme de pondération sera proche de 1. Dans le cas où un voisinage du point $P_0(x_0,y_0)$ est considéré, un terme de pondération $\phi(\bar{v}_x,\bar{v}_y)$ pourra être employé, où $\bar{v}_x$ et $\bar{v}_y$ sont des moyennes du champ de vitesse sur un voisinage du point $P_0(x_0,y_0)$.

A titre d'exemple, on pourra utiliser $\varphi : x \rightarrow 1/(1+(x/0.02)^2)$ qui est bien une fonction décroissante à valeurs entre 0 et 1.

D'autres formes du terme de pondération pourront être utilisées dès qu'elles fournissent un terme de faible valeur dans les régions où l'estimation fournie par le terme d'attache à la donnée est peu fiable.

Le terme de pondération peut en particulier comporter un terme de pondération des régions homogènes par exemple de la forme $\psi(\lambda_+/g)$ où $\psi$ est une fonction croissante positive sur $[0,+\infty[$, $\lambda_+$ est une fonction des gradients spatio-temporels de l'intensité (par exemple la valeur propre supérieure de la matrice des gradients $P$ qui est détaillée plus loin) et $g$, est une valeur seuil de pondération. A titre d'exemple, on pourra utiliser une fonction $\psi$ de la forme $\psi : x \rightarrow 1/(1+(0.2/x)^2)$

Le terme $\lambda^2(\bar{v}_x - v_x) + (\bar{v}_y - v_y)^2)$ de l'équation (6) précédente est un terme de régulation. Les valeurs moyennes $\bar{v}_x$ et $\bar{v}_y$ correspondent aux valeurs moyennes des composantes du champ de vitesse sur un voisinage du point $P_0(x_0,y_0)$, respectivement prises selon l'axe $Ox$ et l'axe $Oy$.

Le terme de régulation permet de remplacer l'estimation du champ de vitesse fournie par le terme d'attache à la donnée par la valeur moyenne dudit champ sur un voisinage du point $P_0(x_0,y_0)$.

Grâce au terme de pondération détaillé ci-avant, ce remplacement est effectué uniquement au niveau des points $P_0(x_0,y_0)$ pour lesquels ladite estimation est irrégulière par suite soit d'une absence de gradient (c'est-à-dire des gradients sensiblement nuls), soit de gradients spatiaux vectoriels sensiblement parallèles.

D'autres formes du terme de régulation pourront être utilisées, de façon à fournir un terme permettant d'obtenir une valeur du champ de vitesse cohérente avec les valeurs du champ de vitesse estimées dans le voisinage du point $P_0(x_0,y_0)$.

A titre d'exemple, les valeurs moyennes du champ de vitesse pourront être obtenues par application d'un filtre pyramidal F d'ordre 5 au champ de vitesse: $\bar{V}_n = V_n * F$ avec par exemple :

$$F = \frac{1}{3^4}\begin{bmatrix} 1 & 1 & 1 \end{bmatrix} * \begin{bmatrix} 1 & 1 & 1 \end{bmatrix} * \begin{bmatrix} 1 \\ 1 \\ 1 \end{bmatrix} * \begin{bmatrix} 1 \\ 1 \\ 1 \end{bmatrix} \quad (11)$$

La résolution du système est réalisée de façon itérative pour chaque point $P_0(x_0,y_0)$ de l'image, afin d'obtenir une estimation $V$ du champ de vitesse $V = \lim_{n \rightarrow +\infty} V_n$

A chaque itération $n$, la fonctionnelle des moindres carrés $J$ au point $P_0(x_0,y_0)$ de l'équation (6) est minimisée par une méthode matricielle. Cette méthode consiste à mettre la fonctionnelle $J$ sous forme matricielle avant de la dériver et d'annuler cette dérivée pour obtenir une solution du champ de vitesse à l'itération $n$ : $V_n$.

La dérivation et l'annulation de la dérivée mènent à résoudre l'équation suivante :

$$\begin{bmatrix} \phi(v_{x,n},v_{y,n})\begin{bmatrix} W(r_1)I_x(r_1) & W(r_1)I_y(r_1) \\ \dots & \dots \\ W(r_n)I_x(r_n) & W(r_n)I_y(r_n) \end{bmatrix} \\ \lambda\begin{bmatrix} 1 & 0 \\ 0 & 1 \end{bmatrix} \end{bmatrix}\begin{bmatrix} v_{x,n+1} \\ v_{y,n+1} \end{bmatrix} = \begin{bmatrix} \phi(v_{x,n},v_{y,n})\begin{bmatrix} -W(r_1)I_t(r_1) \\ \dots \\ -W(r_n)I_t(r_n) \end{bmatrix} \\ \lambda\begin{bmatrix} \bar{v}_{x,n} \\ \bar{v}_{y,n} \end{bmatrix} \end{bmatrix} \quad (7)$$

où $r_i$ correspond aux coordonnées des points $P_i(x_i,y_i)$ situés dans le voisinage $\Omega_0$ du point $P_0(x_0,y_0)$ et $I_x = \frac{\partial I}{\partial x}$,

$I_y = \frac{\partial I}{\partial y}$ et $I_t = \frac{\partial I}{\partial t}$. $V_n = \begin{bmatrix} v_{x,n} \\ v_{y,n} \end{bmatrix}$ correspond au champ de vitesse calculé à l'itération $n$ et $\bar{V}_n = \begin{bmatrix} \bar{v}_{x,n} \\ \bar{v}_{y,n} \end{bmatrix}$ corres-

pond à la moyenne du champ de vitesse calculé à l'itération *n* telle que définie ci-avant pour le terme de régulation.

Les équations définissant le terme de régularisation sont ici :

$$\lambda \begin{bmatrix} 1 & 0 \\ 0 & 1 \end{bmatrix} \begin{bmatrix} v_{x,n+1} \\ v_{y,n+1} \end{bmatrix} = \lambda \begin{bmatrix} \bar{v}_{x,n} \\ \bar{v}_{y,n} \end{bmatrix}$$

On peut, de façon avantageuse, privilégier la régularisation non pas suivant $\vec{e}_x$ et $\vec{e}_y$ mais suivant la direction du gradient vectoriel d'intensité $\vec{r} = \dfrac{\vec{\nabla}I}{\|\vec{\nabla}I\|}$ et un vecteur orthogonal $\vec{s}$. Dans ce cas, les équations définissant le terme de régularisation pourront être :

$$\begin{bmatrix} a\cos(\theta) & a\sin(\theta) \\ -b\sin(\theta) & b\cos(\theta) \end{bmatrix} \begin{bmatrix} v_{x,n+1} \\ v_{y,n+1} \end{bmatrix} = \begin{bmatrix} a\big(\cos(\theta)\bar{v}_{x,n} + \sin(\theta)\bar{v}_{y,n}\big) \\ b\big(-\sin(\theta)\bar{v}_{x,n} + \cos(\theta)\bar{v}_{y,n}\big) \end{bmatrix} \quad (8)$$

où $\theta = \arg(I_x + iI_y)$ et les coefficient *a* et *b* permettent de pondérer les directions de régularisation $\vec{r}$ et $\vec{s}$ (on peut par exemple choisir $a < b$).

Il est en outre possible de déterminer une moyenne pondérée de la direction du gradient vectoriel sur le voisinage $\Omega_0$ ce qui revient à trouver les valeurs et vecteurs propres de la matrice *P*.

On peut inverser la matrice de l'équation (7) pour la résoudre et obtenir le champ de vitesse à l'itération *n* + 1 :

$$V_{n+1} = \big(\phi(V_n)^2 P + R\big)^{-1} \big(\phi(V_n)^2 Q + R\bar{V}_n\big) \quad (9)$$

où $V_n = \begin{bmatrix} v_{x,n} \\ v_{y,n} \end{bmatrix}$, $P = \begin{bmatrix} \sum W^2 I_x^2 & \sum W^2 I_x I_y \\ \sum W^2 I_x I_y & \sum W^2 I_y^2 \end{bmatrix}$, $Q = \begin{bmatrix} -\sum W^2 I_x I_t \\ -\sum W^2 I_y I_t \end{bmatrix}$ et *R* est obtenu à partir de l'équation de régularisation (8), par exemple :

$$R = \begin{bmatrix} a^2\cos(\theta)^2 + b^2\sin(\theta)^2 & \big(a^2 - b^2\big)\cos(\theta)\sin(\theta) \\ \big(a^2 - b^2\big)\cos(\theta)\sin(\theta) & a^2\sin(\theta)^2 + b^2\cos(\theta)^2 \end{bmatrix} \quad (10)$$

Les sommes $\sum$ de la matrice *P* peuvent être comprises comme étant des sommes sur les points $P_i(x_i,y_i)$ du voisinage $\Omega_0$ du point $P_0(x_0,y_0)$, et les termes *W* et les gradients spatio-temporels de l'intensité sont pris au niveau desdits points $P_i(x_i,y_i)$.

Les termes *W* correspondent à la fonction fenêtre $W_0(x,y)$ définie ci-avant, qui permet d'effectuer une pondération sur l'ensemble des points du voisinage $\Omega_0$ du point $P_0(x_0,y_0)$.

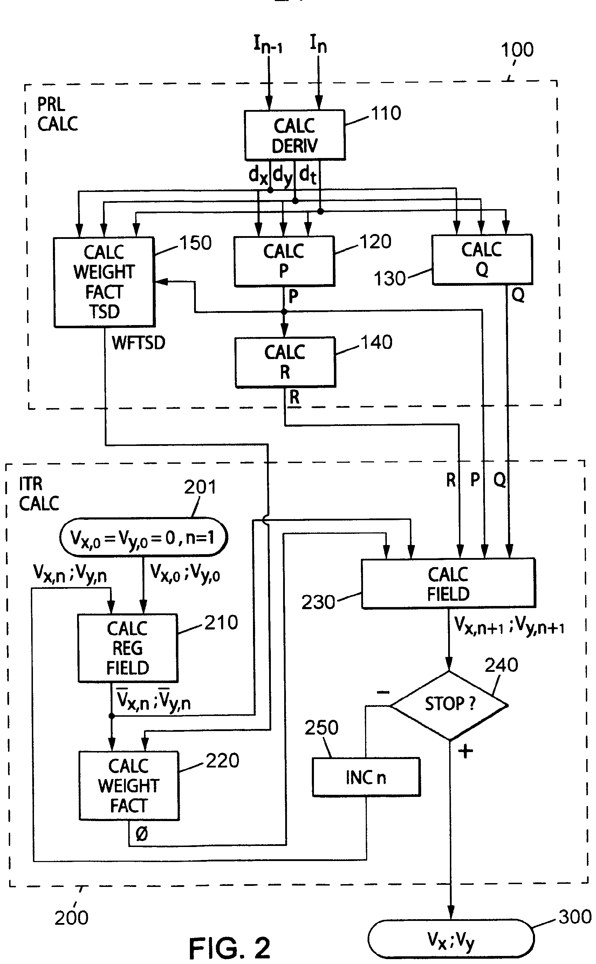

En référence à la **figure 2**, un procédé d'estimation de mouvement selon un mode de réalisation de la présente invention comprend deux étapes, une étape de calculs préliminaires 100 suivie d'une étape de calcul itératif du champ de vitesse 200.

On considère ici une série d'images $I_i$, pour *i* entier compris entre 1 et *N*. Cette série d'images comprend au moins une image précédente $I_{k-1}$ et une image suivante $I_k$.

La première étape 100 consiste à initialiser les termes de base.

Elle comporte une première opération 110 de calcul des dérivées spatio-temporelles de l'intensité à partir des images précédente $I_{k-1}$ et suivante $I_k$. Cette étape consiste donc à calculer les termes $I_x = \dfrac{\partial I}{\partial x}$, $I_y = \dfrac{\partial I}{\partial y}$ et $I_t = \dfrac{\partial I}{\partial t}$ en chaque point de l'image. Les points de l'image pourront être choisis comme correspondant aux points de l'image précédente, l'image suivante ou dans un référentiel différent des deux images. La dérivée temporelle $I_t = \dfrac{\partial I}{\partial t}$ est estimée en utilisant une information sur l'intervalle temporel séparant les deux images.

Une deuxième opération 120 consiste à déterminer la matrice $P = \begin{bmatrix} \sum W^2 I_x^2 & \sum W^2 I_x I_y \\ \sum W^2 I_x I_y & \sum W^2 I_y^2 \end{bmatrix}$ à partir des dérivées spatiotemporelles ainsi que d'une fonction de fenêtre $W$ définissant la pondération des points du voisinage $\Omega$ de chaque point considéré $P_0(x_0,y_0)$ de l'image.

Au cours d'une troisième opération 130, la matrice $Q = \begin{bmatrix} -\sum W^2 I_x I_t \\ -\sum W^2 I_y I_t \end{bmatrix}$ est évaluée.

Une quatrième opération 140 permet de calculer la matrice de régulation $R$ par exemple de la façon détaillée ci-avant dans l'équation (10).

Enfin, une cinquième opération 150 peut comporter la détermination d'un niveau de pondération des régions homogènes sur la base des valeurs propres de la matrice $P$. Les régions homogènes correspondent en effet aux régions dans lesquelles les valeurs propres de la matrice $P$ sont de faibles valeurs, une valeur seuil de pondération pour les valeurs propres de la matrice $P$ peut donc être fixée pour permettre de pondérer les régions homogènes.

Au cours d'une deuxième étape 200, des vecteurs de mouvement sont estimés en une pluralité de points d'une image choisie parmi l'image précédente $I_{k-1}$ et l'image suivante $I_k$.

Un ensemble 201 de valeurs du champ de vitesse $v_x$, $v_y$ en chaque point $P_0(x_0,y_0)$ de l'image est tout d'abord initialisé. Ces valeurs correspondent au champ de vitesse $V_0$ à l'itération 0.

La deuxième étape 200 comprend ensuite une première opération 210 consistant à déterminer les moyennes du champ de vitesse $\bar{V}_n = \begin{bmatrix} \bar{v}_{x,n} \\ \bar{v}_{y,n} \end{bmatrix}$ correspondant à la moyenne du champ de vitesse sur un voisinage du point $P_0(x_0,y_0)$, définie ci-avant pour le terme de régulation.

Une deuxième opération 220 va consister en un calcul du terme de pondération $\phi(V_n)$, calcul qui peut utiliser les valeurs moyennes du champ déterminées au cours de la première opération 210 détaillée ci-avant.

Puis, une troisième opération 230 consiste en la résolution de l'équation (10) permettant d'obtenir le nouveau champ de vitesse $V_{n+1}$ de l'étape $n+1$ à partir des matrices déterminées au cours de l'étape préliminaire 100 ainsi que des résultats des première 210 et deuxième 220 opérations de l'étape de calcul 200.

Dans une quatrième étape 240, l'opportunité d'arrêter le calcul itératif est évaluée face à un critère prédéfini. Ce critère peut constituer à comparer le numéro $n$ de l'itération en cours avec un nombre d'itération maximal $n_{max}$, c'est-à-dire évaluer la condition $n \le n_{max}$.

Dans le cas où le nombre d'itération prévu est atteint, l'étape de calcul itératif 200 se termine et retourne le dernier champ de vitesse estimé $V_{n\,max}$.

Dans le cas contraire, le compteur du nombre d'itération $n$ est incrémenté au cours d'une cinquième étape 250 et le champ de vitesse estimé $V_n$ sert de valeur initiale à un nouveau calcul de l'étape 200. Il est donc utilisé comme valeur initiale pour une nouvelle opération 210 de détermination des moyennes du champ de vitesse. Les opérations suivantes 220, 230, 240 sont alors réitérées.

Un autre critère pour la quatrième étape 240 peut comprendre la comparaison d'un écart entre le champ de vitesse obtenu à l'issu de la troisième étape 230 $V_{n+1}$ et le champ de vitesse obtenu à l'itération précédente $V_n$. A titre d'exemple un critère peut consister à évaluer la condition suivante $\|V_{n+1} - V_n\| \le \varepsilon$ où $\varepsilon$ est une valeur prédéfinie.

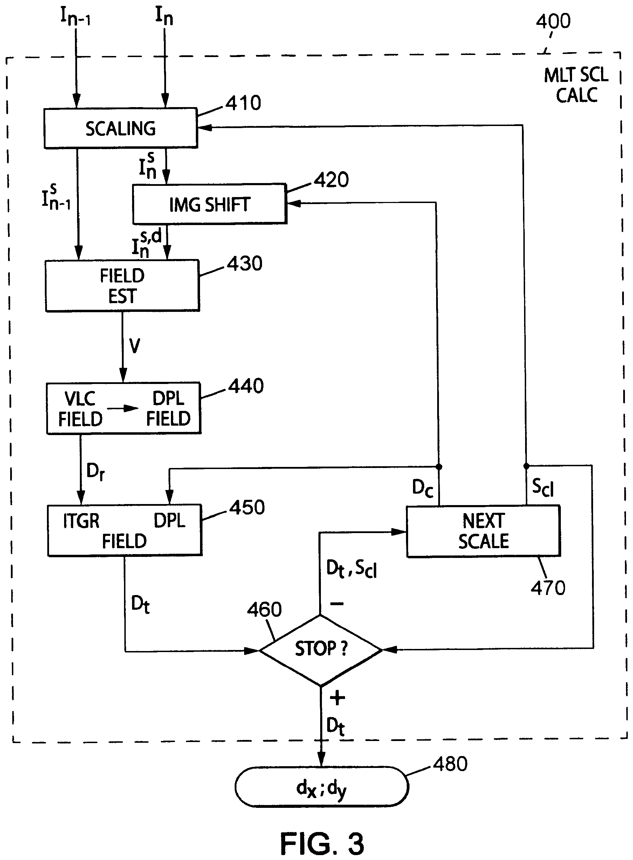

En se référant maintenant à la **figure 3**, un procédé d'estimation de mouvement multi-échelle 400 selon la présente invention va maintenant être décrit.

Le développement au premier ordre (2) de l'équation de contrainte du mouvement apparent (1) détaillée ci-avant n'est valable que pour de petits déplacements, par exemple de l'ordre du pixel. Pour mesurer de grands déplacements, il est donc avantageux de procéder à un calcul multi-échelle.

Le procédé d'estimation de mouvement multi-échelle 400 est appliqué à une série d'images $I_i$, pour $i$ entier compris entre 1 et $N$, cette série d'images comprenant au moins une image précédente $I_{k-1}$ et une image suivante $I_k$.

Au cours d'une première étape 410, les images précédente $I_{k-1}$ et suivante $I_k$ sont mises à l'échelle pour donner des images mises à l'échelle $I_{k-1}^s$, $I_k^s$. Cette étape peut comprendre l'application d'un filtre anti-repliement puis la décimation de l'image.

Un filtre anti-repliement est parfois dénommé aussi filtre anticrénelage ou filtre antialiasing et consiste à retirer, avant décimation les fréquences supérieures à la moitié de la fréquence de décimation. Les images pourront également être pré-filtrées pour filtrer les hautes fréquences, par exemple par des filtres pyramidaux.

Au cours d'une deuxième étape 420 et dans le cas où une première itération du procédé 400 a déjà été effectuée, une des images, par exemple l'image suivante mise à l'échelle $I_n^s$ est recalée en fonction du champ de déplacement D$_c$ déterminé à l'itération précédente, pour donner une image suivante mise à l'échelle recalée $I_n^{s,d}$.

Dans le cas où le procédé est à sa première itération, le champ de déplacement $D_c$ et l'échelle $Scl$ sont initialisé à zéro.

Une troisième étape 430 comprend l'exécution d'un procédé d'estimation de mouvement selon un mode de réalisation de la présente invention comprenant deux étapes, une étape de calculs préliminaires 100 suivie d'une étape de calcul itératif du champ de vitesse 200, tel que décrit ci-avant en relation avec la figure 3. Les images précédente et suivante introduites en entrée dans ledit procédé correspondent aux images précédente mise à l'échelle $I_{k-1}^s$ et suivante mise à l'échelle recalée $I_k^{s,d}$. Ce procédé permet d'estimer une estimation $V$ du champ de vitesse résiduel entre les images recalées à une échelle donnée.

Puis, une quatrième étape 440 de conversion du champ de vitesse résiduel $V$ en un champ de déplacement résiduel $D_r$ est effectuée. Cette étape peut par exemple comprendre une intégration temporelle.

Une cinquième étape 450 comprend la sommation vectorielle avec lissage du champ de déplacement résiduel $D_r$ et du champ de déplacement $D_c$ déterminé à l'itération précédente pour donner un champ de déplacement total $D_t$, au moyen de l'équation formelle suivante :

$$D_t = D_r \oplus D_c$$

La sommation vectorielle avec lissage peut comprendre plusieurs méthodes de régularisation du champ avant ou après interpolation et sommation. Il est par exemple possible d'appliquer un filtre linéaire (par exemple un filtre pyramidal de faible taille comme celui de l'équation (11)), un filtre non-linéaire (comme une moyenne pondérée des points du voisinage), un filtrage médian ou une diffusion non-linéaire à capacité variable. Une diffusion non-linéaire à capacité variable est fondée sur une équation aux dérivées partielles similaire à l'équation de la chaleur :

$$\frac{\partial J}{\partial t} = div\left(c\left(\|\nabla J\|\right)\nabla J\right) \quad \text{avec} \quad J(x,y,t) = I(x,y)$$

La fonction $c$, appelée capacité, peut par exemple être de la forme $c:x \rightarrow 1/(1+(x/k)^2)$ où $k$ est une capacité de filtrage, par exemple prise égale à 1 ou dépendant du niveau de bruit local. Le calcul de cette équation peut se faire par un schéma d'Euler explicite à pas fixe, le calcul du terme de divergence étant effectué par un schéma numérique de Perona-Malik.

Au cours d'une sixième étape 460, un critère de sélection est appliqué pour déterminer s'il est nécessaire de procéder à une nouvelle itération à une échelle différente. Ce critère peut par exemple être un critère fonction du champ de déplacement total $D_t$ obtenu ou un critère fonction du nombre ou de la valeur de l'échelle $Scl$.

Dans le cas où une nouvelle itération est effectuée, une étape 470 de changement d'échelle peut être exécutée. Cette étape peut comprendre une opération de mise en forme du champ de déplacement $D_c$ à l'itération suivante, à partir du champ de déplacement total $D_t$. L'étape 470 peut en outre comprendre une opération de mise à jour du paramètre d'échelle $Scl$ à la nouvelle valeur du paramètre d'échelle.

Un mode de réalisation alternatif du procédé d'estimation de mouvement multi-échelle 400 ci-dessus peut ne pas comprendre la deuxième étape 420 de recalage. Une estimation de champ telle que celle de la troisième étape 430 est alors réalisée à chaque échelle et le champ de déplacement final sera composé à partir des champs estimés à chaque échelle et considérés comme fiables selon un critère de conditionnement.

Un tel critère de conditionnement peut par exemple être fondé sur les valeurs propres de la matrice $M = \phi(V_n)^2 P + R$ détaillée dans l'équation (9) ci-avant. Cette matrice est une matrice symétrique réelle de taille 2x2 et un critère de bon conditionnement peut par exemple être fonction du rapport entre les deux valeurs propres de la matrice $M$, par exemple $\frac{\lambda_+}{\lambda_-} \leq 10$ .

Ainsi, pour chaque point $P_0(x_0,y_0)$ de l'image, le champ de mouvement estimé pourra avoir soit une valeur fiable fournie par une estimation à une échelle fine soit une valeur fiable estimée à une échelle plus grossière et multipliée et zoomée par le facteur d'échelle qui convient.

Une fois un procédé d'estimation exécuté, il est possible de filtrer temporellement le champ de déplacement obtenu, les objets mobiles se déplaçant usuellement avec des accélérations faibles. On peut par exemple utiliser à cette fin un filtre pyramidal d'ordre 3 sur des images recalée ou non recalées. Il est aussi possible d'utiliser un filtrage prédictif causal, c'est-à-dire prévoyant le champ de déplacement à un instant donné à partir des précédentes estimations, par exemple en supposant une vitesse de déplacement des objets mobiles dans l'image constante. Un filtrage prédictif causal permet d'estimer une donnée à partir des précédentes et d'un modèle qui peut éventuellement être ajusté. Un exemple classique est le filtrage de Kalman et l'homme du métier pourra en utiliser toute variante connue de l'état de la technique.

Enfin, il aussi possible d'utiliser un terme d'attache à la donnée dans le domaine fréquentiel et non pas spatial. Une telle méthode est similaire à la méthode Gabor et emploie des filtres de Gabor connus de l'homme du métier.

Le système d'attache à la donnée est alors le suivant :

$$\left[\eta\!\left(reg\!\left(v_{x,n},v_{y,n}\right)\right)\begin{bmatrix} I_x * G_1 & I_y * G_1 \\ ... & ... \\ I_x * G_n & I_y * G_n \end{bmatrix}\right]\begin{bmatrix} v_{x,n+1} \\ v_{y,n+1} \end{bmatrix} = \left[\eta\!\left(reg\!\left(v_{x,n},v_{y,n}\right)\right)\begin{bmatrix} -I_t * G_1 \\ ... \\ -I_t * G_n \end{bmatrix}\right]$$

où les $G_i$ sont des filtres de Gabor, par exemple, de la forme :

$$G_i(x, y) = \Re\left\{TF^{-1}\left[\exp\!\left(-2\pi^2\sigma^2\left((x - f_0\cos(\theta_i))^2 + (y - f_0\cos(\theta_i))^2\right)\right)\right]\right\}$$

où les $\theta_i$ sont les orientations des filtres et sont par exemple choisies de 0° à 150° par pas de 30°, $f_0$ est la fréquence centrale des filtres et peut par exemple être choisie dans la gamme de [0.25 0.4]$f_{max}$ et $\sigma$ est l'étendue de la gaussienne et peut par exemple être choisie égale à 1.

La **figure 4** illustre un système 500 de traitement d'une série d'images captées par un capteur d'image adapté pour mettre en oeuvre un procédé selon un mode de réalisation de la présente invention. Un tel système 500 peut avantageusement correspondre à une carte électronique embarquée.

Un tel système 500 comprend :

- un premier circuit 510 d'estimation de champ pouvant par exemple comprendre un circuit de calculs préliminaires 511 et un circuit de calcul itératif 512.

Ces circuits 510, 511, 512 peuvent par exemple comprendre des micro-processeurs, des circuits logiques programmables tels que des FPGA, des ASIC ou « Application-Specific Integrated Circuit » ou des circuits intégrés logiques d'un autre type.

Il peut en outre comprendre :

- un circuit de traitement d'images 520, adapté pour réaliser des opérations de mise à l'échelle ou de recalage d'une image.
- un circuit de traitement des champs 530 adapté pour réaliser des opérations sur les champs de vitesse ou les champs de déplacement, par exemple la conversion d'un champ de vitesse en un champ de mouvement, la sommation vectorielle avec lissage de champs de déplacement ou le passage à l'échelle suivante.
- un circuit de contrôle 540 adapté, d'une part, pour déclencher et contrôler une séquence d'étapes d'un procédé tel que décrit ci-avant en commandant les circuits d'estimation de champ 510, de traitement d'images 520 et de traitement des champs 530 et, d'autre part, pour décider si ledit procédé doit être réitéré et pour déclencher à nouveau la séquence si tel est le cas.

Ces circuits peuvent par exemple comprendre des micro-processeurs, des circuits logiques programmables tels que des FPGA, des ASIC ou « Application-Specific Integrated Circuit » ou des circuits intégrés logiques d'un autre type.

Si la séquence d'étapes est déclenchée et contrôlée à nouveau, les étapes peuvent être appliquées aux mêmes images précédente et suivante.

Dans une variante, si les étapes d'un procédé tel que décrit ci-avant sont réitérées, à chaque réitération, elles sont appliquées en considérant l'image suivante de l'itération précédente en tant qu'image précédente et en considérant une image qui suit ladite image suivante de l'itération précédente en tant qu'image suivante.$

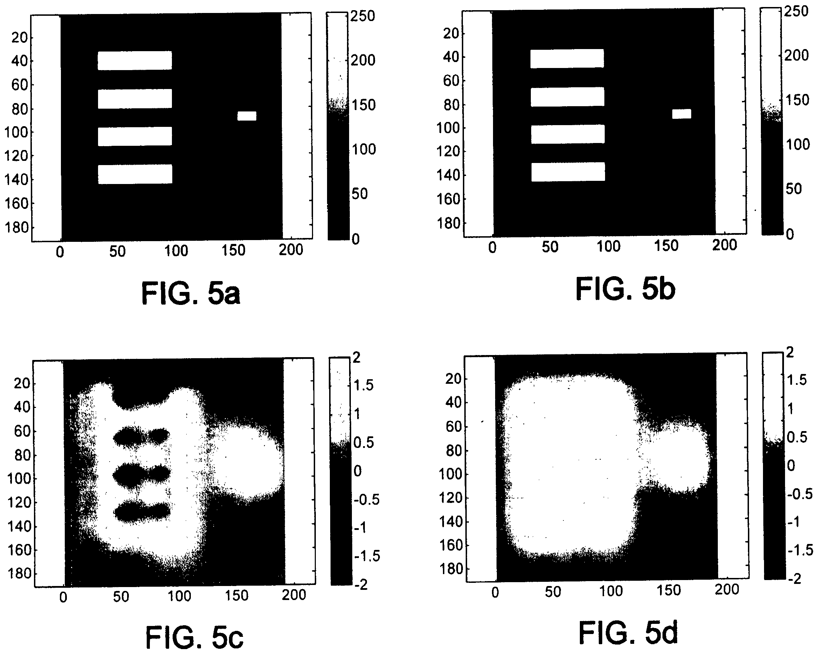

En se référant à présent aux **figures 5a, 5b, 5c et 5d**, une estimation de mouvement dans une série d'images, obtenue par exécution d'un procédé selon l'invention, est illustrée.

La **figure 5a** présente à titre indicatif une première image source comportant un groupe de quatre rectangles blancs ainsi qu'un petit rectangle isolé à la droite du groupe.

La **figure 5b** illustre une seconde image source comportant les mêmes groupe et rectangle isolé, le groupe de quatre rectangles étant déplacé, par rapport à la première image source, d'un pixel vers la droite de l'image et de deux pixels vers le bas de l'image et le rectangle isolé étant déplacé de deux pixels vers le bas et de deux pixels vers la droite de l'image.

La **figure 5c** représente une estimation du champ de vitesse horizontal obtenue suite à l'exécution d'un procédé selon un mode de réalisation de la présente invention.

Sur cette figure, la composante horizontale des vecteurs de mouvement estimé est indiquée en chacun des points de l'image par une valeur d'intensité de niveau de gris variant entre blanc (plus forte valeur de la composante horizontale du vecteur de mouvement estimé au point de l'image considéré) et noir (plus faible valeur de la composante horizontale du vecteur de mouvement estimé au point de l'image considéré).

Enfin, la **figure 5d** est une illustration d'une estimation du champ de vitesse vertical obtenue suite à l'exécution d'un procédé selon un mode de réalisation de la présente invention.

Sur cette figure, la composante verticale des vecteurs de mouvement estimé est indiquée en chacun des points de l'image par une valeur d'intensité de niveau de gris variant entre blanc (plus forte valeur de la composante verticale du vecteur de mouvement estimé au point de l'image considéré) et noir (plus faible valeur de la composante verticale du vecteur de mouvement estimé au point de l'image considéré).

## Revendications

1. Procédé d'estimation de mouvement dans une série d'images captées par un capteur d'image, ladite série d'images comportant au moins une image précédente $I_{k-1}$ et une image suivante $I_k$, les images comportant des points auxquels sont associées des données d'intensité,
   ledit procédé comportant une étape d'estimation de vecteurs de mouvement estimé, réalisée en une pluralité de points d'une image choisie parmi la liste constituée par l'image précédente $I_{k-1}$ et l'image suivante $I_k$,
   ladite étape d'estimation comprenant, pour chacun des points de ladite pluralité de points d'une image, une opération de minimisation d'une fonctionnelle de vecteurs de mouvement,
   la fonctionnelle comportant une somme d'au moins un terne des données et un terme de régulation,
   le terme des données étant fonction de gradients spatio-temporels de données d'intensité associées à une pluralité de points d'un voisinage d'un point,
   le terme de régulation ayant une valeur finie au moins en chacun des points de ladite pluralité de points d'une image aux niveaux desquels à minimisation du terme des données fournit une solution irrégulière,
   ledit procédé étant **caractérisé en ce que** le terme des données comporte un produit d'un terme de pondération et d'un terme d'attache à la donnée,
   le terme de pondération étant fonction d'un degré de régularité de vecteurs de mouvement estimés,
   le terme d'attache à la donnée étant fonction de gradients spatio-temporels de données d'intensité associées à une pluralité de points d'un voisinage d'un point.

2. Procédé selon la revendication 1, dans lequel l'opération de minimisation, est réitérée au moins une fois.

3. Procédé selon la revendication précédente, dans lequel, lors d'une itération $n+1$ de l'opération de minimisation, le terme de régulation est fonction de vecteurs ce mouvement estimé obtenus à l'itération précédente $n$.

4. Procédé selon l'une quelconque des revendications 2 et 3, dans lequel, lors d'une itération $n+1$ de l'opération de minimisation, le terme de pondération est fonction d'une variance locale de vecteurs de mouvement estimé obtenus à l'itération précédente $n$.

5. Procédé selon l'une des revendications précédentes, dans lequel l'opération de minimisation de la fonctionnelle comprend une minimisation des moindres carrés.

6. Procédé selon l'une des revendications précédentes, comprenant en outre une étape de mise à l'échelle d'images de la série d'images, ladite étape de mise à l'échelle étant réalisée préalablement à l'étape d'estimation de vecteurs de mouvement estimé.

7. Procédé selon la revendication 6, dans lequel l'étape de mise à l'échelle et l'étape d'estimation sont réitérées pour au moins deux échelles différentes d'images de la série d'images.

8. Procédé selon la revendication 7, comprenant en cutre une étape de recalage de l'image suivante $I_k$, réalisée après

l'étape de mise à l'échelle et avant l'étape de minimisation, l'étape de recalage comprenant, pour une itération $n+1$ desdites étapes de mise à l'échelle, de recalage et d'estimation, le recalage de l'image suivante ($I_k$) sur la base des vecteurs de mouvement estimé obtenus à l'itération précédente $n$.

9. Procédé selon la revendication 7, dans lequel les vecteurs de mouvement estimé obtenus à une itération $n+1$ sont conservés s'ils vérifient un critère de fiabilité d'estimation et remplacés par une fonction des vecteurs de mouvement estimé obtenus à l'itération précédente $n$ s'ils ne vérifient pas ledit critère.

10. Système de traitement d'une série d'images captées par un capteur d'imaqe, ladite série d'images comportant au moins une image précédente $I_{k-1}$ et une image suivante $I_k$, les images comportant chacune des points auxquels sont associées des données d'intensité,
le système comportant un circuit d'estimation adapté pour estimer des vecteurs de mouvement estimé en une pluralité de points d'une image choisie parmi la liste constituée par l'image précédente $I_{k-1}$ et l'image suivante $I_k$,
ladite estimation comportant, pour chacun des points de ladite pluralité de points d'une image, une opération de minimisation d'une fonctionnelle de vecteurs de mouvement,
la fonctionnelle comportant une somme d'au moins un terme des données et un terme de régulation,
le terme des données étant fonction de gradients spatio-temporels de données d'intensité associées à une pluralité de points d'un voisinage d'un point,
le terme de régulation ayant une valeur finie au moins en chacun des points de ladite pluralité de points d'une image aux niveaux desquels la minimisation, du terme des données fournit une solution irrégulière,
le terme des données comportant un produit d'un terme de pondération et d'un terme d'attache à la donnée,
le terme de pondération étant fonction d'un degré de régularité ce vecteurs de mouvement estimés,
le terme d'attache à la donnée étant fonction de gradients spatio-temporels de données d'intensité associées à une pluralité de points d'un voisinage d'un point.

11. Programme d'ordinateur comprenant des instructions aptes à mettre en oeuvre un procédé selon l'une quelconque des revendications 1 à 9, lors d'une exécution de ce programme par un circuit d'un système de traitement d'une série d'images captées par un capteur d'image.

12. Support d'enregistrement non transitoire sur lequel est stocké un programme d'ordinateur selon la revendication 11.

## Patentansprüche

1. Verfahren zur Schätzung einer Bewegung in einer Reihe von Bildern, die von einem Bildsensor erfasst werden, wobei die Bilderreihe mindestens ein vorhergehendes Bild $I_{k-1}$ und ein folgendes Bild $I_k$ umfasst, wobei die Bilder Punkte umfassen, denen Intensitätsdaten zugeordnet sind,
wobei das Verfahren einen Schritt der Schätzung von Vektoren einer geschätzten Bewegung umfasst, die in einer Vielzahl von Punkten eines Bildes verwirklicht ist, das aus der Liste ausgewählt ist, die von dem vorhergehenden Bild $I_{k-1}$ und dem folgenden Bild $I_k$ gebildet ist,
wobei der Schritt der Schätzung für jeden der Punkte der Vielzahl von Punkten eines Bildes einen Vorgang der Minimierung eines Funktionals von Bewegungsvektoren umfasst,
wobei das Funktional eine Summe von mindestens einem Datenelement und einem Regulierungselement umfasst,
wobei das Datenelement von Raum-Zeit-Gradienten von Intensitätsdaten abhängt, die einer Vielzahl von Punkten einer Umgebung eines Punktes zugeordnet sind,
wobei das Regulierungselement einen endlichen Wert zumindest an jedem der Punkte der Vielzahl von Punkten eines Bildes hat, in deren Bereichen die Minimierung des Datenelements eine unregelmäßige Lösung liefert,
wobei das Verfahren **dadurch gekennzeichnet ist, dass** das Datenelement ein Produkt eines Gewichtungselements und eines Datumverbindungselements umfasst,
wobei das Gewichtungselement von einem Regelmäßigkeitsgrad von geschätzten Bewegungsvektoren abhängt,
wobei das Datumverbindungselement von Raum-Zeit-Gradienten von Intensitätsdaten abhängt, die einer Vielzahl von Punkten einer Umgebung eines Punktes zugeordnet sind.

2. Verfahren nach Anspruch 1, bei dem der Vorgang der Minimierung mindestens einmal wiederholt wird.

3. Verfahren nach dem vorhergehenden Anspruch, bei dem bei einer Iteration n+1 des Minimierungsvorgangs das Regulierungselement von Vektoren einer geschätzten Bewegung, die bei der vorhergehenden Iteration n erhalten wurden, abhängt.

**4.** Verfahren nach einem der Ansprüche 2 und 3, bei dem bei einer Iteration n+1 des Minimierungsvorgangs das Gewichtungselement von einer lokalen Varianz von Vektoren einer geschätzten Bewegung, die bei der vorhergehenden Iteration n erhalten wurden, abhängt.

**5.** Verfahren nach einem der vorhergehenden Ansprüche, bei dem der Vorgang der Minimierung des Funktionals eine Minimierung der kleinsten Quadrate umfasst.

**6.** Verfahren nach einem der vorhergehenden Ansprüche, ferner umfassend einen Schritt der Skalierung von Bildern der Bilderreihe, wobei der Skalierungsschritt vor dem Schritt der Schätzung von Vektoren einer geschätzten Bewegung erfolgt.

**7.** Verfahren nach Anspruch 6, bei dem der Skalierungsschritt und der Schätzungsschritt für mindestens zwei unterschiedliche Skalen von Bildern der Bilderreihe wiederholt werden.

**8.** Verfahren nach Anspruch 7, ferner umfassend einen Schritt der Neueinstellung des folgenden Bildes $I_k$, der nach dem Skalierungsschritt und vor dem Minimierungsschritt erfolgt, wobei der Neueinstellungsschritt für eine Iteration n+1 der Skalierungs-, Neueinstellungs- und Schätzungsschritte die Neueinstellung des folgenden Bildes $I_k$ auf Basis der Vektoren einer geschätzten Bewegung, die aus der vorhergehenden Iteration n erhalten wurden, umfasst.

**9.** Verfahren nach Anspruch 7, bei dem die Vektoren einer geschätzten Bewegung, die aus einer Iteration n+1 erhalten wurden, beibehalten werden, wenn sie ein Zuverlässigkeitskriterium einer Schätzung bestätigen, und durch eine Funktion der Vektoren einer geschätzten Bewegung, die aus der vorhergehenden Iteration n erhalten wurden, ersetzt werden, wenn sie das Kriterium nicht bestätigen.

**10.** System zur Bearbeitung einer Reihe von Bildern, die von einem Bildsensor erfasst werden, wobei die Bilderreihe mindestens ein vorhergehendes Bild $I_{k-1}$ und ein folgendes Bild $I_k$ umfasst, wobei die Bilder jeweils Punkte umfassen, denen Intensitätsdaten zugeordnet sind,
wobei das System eine Schaltung zur Schätzung umfasst, die dazu vorgesehen ist, Vektoren einer geschätzten Bewegung an einer Vielzahl von Punkten eines Bildes zu schätzen, das aus der Liste ausgewählt ist, die von dem vorhergehenden Bild $I_{k-1}$ und dem folgenden Bild $I_k$ gebildet ist,
wobei die Schätzung für jeden der Punkte der Vielzahl von Punkten eines Bildes einen Vorgang der Minimierung eines Funktionals von Bewegungsvektoren umfasst,
wobei das Funktional eine Summe von mindestens einem Datenelement und einem Regulierungselement umfasst,
wobei das Datenelement von Raum-Zeit-Gradienten von Intensitätsdaten abhängt, die einer Vielzahl von Punkten einer Umgebung eines Punktes zugeordnet sind,
wobei das Regulierungselement einen endlichen Wert zumindest an jedem der Punkte der Vielzahl von Punkten eines Bildes hat, in deren Bereichen die Minimierung des Datenelements eine unregelmäßige Lösung liefert,
wobei das Datenelement ein Produkt eines Gewichtungselements und einer Datenverbindungselements umfasst,
wobei das Gewichtungselementelement von einem Regelmäßigkeitsgrad von geschätzten Bewegungsvektoren abhängt,
wobei das Datenverbindungselement von Raum-Zeit-Gradienten von Intensitätsdaten abhängt, die einer Vielzahl von Punkten einer Umgebung eines Punktes zugeordnet sind.

**11.** Computerprogramm, umfassend Befehle, die geeignet sind, ein Verfahren nach einem der Ansprüche 1 bis 9 bei einer Ausführung dieses Programms durch eine Schaltung eines Systems zur Bearbeitung einer Reihe von Bildern, die von einem Bildsensor erfasst werden, umzusetzen.

**12.** Nicht flüchtiger Aufzeichnungsträger, auf dem ein Computerprogramm nach Anspruch 11 gespeichert ist.

**Claims**

**1.** Method for estimation of motion in a series of images captured by an image sensor where said series of images comprises at least one preceding image $I_{k-1}$ and one following image $I_k$ and the images comprise points with which are associated brightness data:

where said method comprises a step of estimating the estimated motion vectors, done at a plurality of image points chosen among the list made up by the previous image $I_{k-1}$ and the following image $I_k$;

where said estimation step includes, for each of the points of said plurality of points of an image, an operation of minimization of a functional of motion vectors;

where the functional comprises a sum of at least one data term and one regulation term;

where the data term is a function of spatial-temporal gradients of brightness data associated with a plurality of points from a neighborhood of a point;

where the regulation term has at least one finite value for each of the points of said plurality of points of an image in the area of which the minimization of the data term provides an irregular solution;

said method being **characterized in that** the data term comprises a product of a weighting term and a data linkage term;

where the weighting term is a function of the degree of regularity of the estimated motion vectors;

where the data linkage term is a function of spatial-temporal gradients of brightness data associated with a plurality of points from a neighborhood of a point.

2. Method according to claim 1, wherein the minimization operation is reiterated at least once.

3. Method according to the preceding claim, wherein during an iteration $n+1$ of the minimization operation, the regulation term is a function of estimated motion vectors resulting from the preceding iteration $n$.

4. Method according to any one of claims 2 and 3, wherein during an iteration $n+1$ of the minimization operation, the weighting term is a function of a local variance of estimated motion vectors resulting from the preceding iteration $n$.

5. Method according to any one of the preceding claims, wherein the operation of minimization of the functional comprises a least-squares minimization.

6. Method according to any one of the preceding claims additionally comprising a step of scaling images from the image series, where said step of scaling is done prior to the step of estimated motion vector estimation.

7. Method according to claim 6, wherein the scaling step and the estimation step are iterated for at least two different image scales of the image series.

8. Method according to claim 7, additionally comprising a step of registering the following image $I_k$, done after the scaling step and before the minimization step, where the registration step comprises, for an iteration $n+1$ of said scaling steps, registration and estimation steps, the registering of the following image ($I_k$) over the base of estimated motion vectors resulting from the preceding iteration $n$.

9. Method according to claim 7, wherein the estimated motion vectors resulting from an iteration $n+1$ are stored if they satisfy an estimation reliability criterion and replaced by a function of the estimated motion vectors resulting from the preceding iteration if they do not satisfy said criterion $n$.

10. System for processing a series of images captured by an image sensor, where said series of images comprises at least one preceding image $I_{k-1}$ and one following image $I_k$, where the images each comprise points with which are associated brightness data;

where the system comprises an estimation circuit suited for estimating the estimated motion vectors at a plurality of points from an image selected among the list made up by the preceding image $I_{k-1}$ and the following image $I_k$;

where said estimation comprises, for each of the points of said plurality of points of an image, an operation of minimization of a functional of motion vectors;

where the functional comprises a sum of at least one data term and one regulation term;

where the data term is a function of spatial-temporal gradients of brightness data associated with a plurality of points from a neighborhood of a point;

where the regulation term has at least one finite value for each of the points of said plurality of points of an image in the area of which the minimization of the data term provides an irregular solution;

where the data term comprises a product of a weighting term and a data linkage term,

where the weighting term is a function of the degree of regularity of the estimated motion vectors;

where the data linkage term is a function of spatial-temporal gradients of brightness data associated with a plurality of points from a neighborhood of a point.

11. Computer program comprising instructions suited for implementing a method according to any one of claims 1 to 9, during execution of this program by circuit from a system for processing a series of images captured by an image sensor.

12. A medium for nonvolatile recording on which a computer program according to claim 11 is stored.

**FIG. 1**

**FIG. 4**

FIG. 2

FIG. 3

**FIG. 5a**

**FIG. 5b**

**FIG. 5c**

**FIG. 5d**

**EP 2 943 935 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0360698 A

**Littérature non-brevet citée dans la description**

- **BLOCK.** *The Robust Estimation of Multiple Motions,* 1996